# EUROPEAN PATENT APPLICATION

(11) **EP 4 825 631 A1**
(43) Date of publication of application: **21.10.2026**
(21) Application number: 26172669.9
(22) Date of filing: 16.04.2026
(51) Int. Cl.: B60K 35/22, G02F 1/1333

(54) **DISPLAY INSTRUMENT**

(30) Priority: 16.04.2025 CN 202520731715 U; 06.05.2025 CN 202520863483 U
(71) Applicant: Shenzhen Vicont Hi-tech Electronics Co., Ltd., Shenzhen, Guangdong Province 518000 (CN)
(72) Inventor: SU, Xianhong, Shenzhen, 518000 (CN); YAO, Jun, Shenzhen, 518000 (CN)
(74) Representative: Chung, Hoi Kan

(57) **Abstract**

The present invention discloses a display instrument, relating to the field of display instrument technology and comprising a housing, a main control board and a display assembly. The display assembly is disposed on one side of the main control board and electrically connected to it. The display assembly employs a digital display or a liquid crystal display. A light-transmitting layer is installed on the housing, which cooperates with the display assembly to allow some light to pass through the side wall of the housing. The present invention solves the problems of traditional display instruments having a single display format and lacking side-light indication functionality.

## Description

### Technical Field

The present invention relates to the field of display instrument technology, and more particularly to a display instrument.

### Background Technology

Display instruments are devices used to display various data or information. They are commonly used in monitoring and controlling industrial equipment, machinery, automobiles, and electronic devices, helping operators view relevant information in real time through visualization. In light mobility devices such as electric bicycles and electric scooters, display instruments are mainly used to display parameters such as vehicle speed, battery level, and operating status.

In existing technologies, traditional display instruments typically use digital tubes or LCD screens as display assemblies, solely for displaying information from the front. Their light-emitting structure primarily serves data display, resulting in a relatively simple overall function. This lack of further utilization of the light source makes it difficult to achieve functions such as side-lighting prompts, ambient lighting effects, or warning reminders. Consequently, the effect on alerting pedestrians or vehicles while riding is insufficient, and it also struggles to balance aesthetics and functional expandability.

Therefore, existing display instruments suffer from the problems of limited display formats and a lack of side-lighting prompts.

### Summary of the Invention

The purpose of the present invention is to provide a display instrument that solves the problems of existing display instruments having a single display format and lacking side-light indication function.

To achieve this purpose, the present invention adopts the following technical solutions:
A display instrument, comprises a housing, a main control board, and a display assembly, wherein the display assembly is disposed on one side of the main control board and electrically connected to the main control board; and
the display assembly adopts a digital display or a liquid crystal display; a light-transmitting layer is installed on the housing, the light-transmitting layer is arranged to cooperate with the display assembly to allow some light to pass through side walls of the housing.

Preferably, the housing comprises a base and an upper cover which are connected mutually, slots are provided on sides of both the base and the upper cover, limiting rings are provided on both sides of the light-transmitting layer, and outer walls of the limiting rings are in contact with inner walls of the slots.

Preferably, the base comprises sets of limiting posts fixed inside, one side of the upper cover is provided with grooves, and inner walls of the grooves fit against outer walls of the limiting posts, and the base and the upper cover are connected by bolts.

Preferably, an outer wall of the base is provided with first clearance grooves, and the upper cover is provided with second clearance grooves; the light-transmitting layer is inserted into the first clearance grooves and the second clearance grooves respectively.

Preferably, the housing is equipped with a cover plate for enabling light protection of the display assembly, and the cover plate is made of PC materials or glass materials.

Preferably, when the display assembly adopts a digital display, the display assembly comprises a digital tube circuit board located on one side of the main control board, and LED beads are provided on one side of the digital tube circuit board; a digital tube plastic shell is provided on one side of the digital tube circuit board, and a digital tube film paper is provided on one side of the digital tube plastic shell.

Preferably, when the display assembly adopts a liquid crystal display, the display assembly comprises a backlight, a liquid crystal screen, and the cover plate, and the light-transmitting layer is made of light-transmitting silicone materials.

Preferably, the housing comprises an internal cavity containing a converter circuit board electrically connected to the main control board, bottom portions of the housing comprise connection holes, the converter circuit board comprises waterproof connectors on a side facing the connection holes, the waterproof connectors are pluggable to external power supplies or signal lines; and
the converter circuit board further comprises a silicone pad on the side facing the connection holes for waterproof sealing of the display instrument; the silicone pad is fitted onto the waterproof connectors, and the converter circuit board covers the connection holes, so that the waterproof connectors at least partially extends into corresponding connection holes.

Preferably, the silicone pad is provided with through holes and the silicone pad is fitted onto the waterproof connectors through the through holes.

Preferably, the connection holes are provided with annular retaining strips.

Preferably, the housing is provided with pre-drilled holes.

Preferably, the housing is equipped with a locking mechanism for locking the display instrument in place.

Compared with existing technologies, the present invention has the following beneficial effects: The display instrument provided by the present invention has a display assembly disposed on one side of the main control board and electrically connected to the main control board, and the display assembly adopts a digital display or liquid crystal display method; at the same time, a light-transmitting layer is installed on the housing, which cooperates with the display assembly to allow some of the light emitted by the display assembly to pass through the side wall of the housing. While ensuring the normal realization of the front data display function of the display instrument, the light generated by the display assembly is further utilized, so that the display instrument has a side light emission function in addition to the front display, thereby improving the problem of the single display form in the prior art. The side light indication effect formed by the side wall light transmission can play a role in alerting pedestrians or vehicles in practical application scenarios, which is conducive to improving the safety of use. This structure does not require the addition of an independent side light emission module, and can combine the display function and the side indication function in the structure, which is conducive to simplifying the overall structure and taking into account the aesthetic appearance and functional expandability of the product. Therefore, the present invention solves the problems of the single display form and lack of side light indication function in the prior art display instruments.

### Brief Description of the Drawings

To more clearly illustrate the technical solutions in the embodiments of the present invention or the prior art, the drawings used in the description of the embodiments or the prior art will be briefly introduced below. Obviously, the drawings described below are merely some embodiments of the present invention. For those skilled in the art, other drawings can be obtained based on these drawings without creative effort.

The structures, proportions, sizes, etc., depicted in the drawings of this specification are only used to complement the content disclosed in the specification, for those skilled in the art to understand and read, and are not intended to limit the conditions under which the present invention can be implemented. Therefore, they do not have substantial technical significance. Any modifications to the structure, changes in proportions, or adjustments to the size, without affecting the effects and objectives achieved by the present invention, should still fall within the scope of the technical content disclosed in the present invention.
Figure 1 is a three-dimensional structural diagram of a first type of display instrument provided in an embodiment of the present invention.
Figure 2 is an exploded structural diagram of the first type of display instrument provided in an embodiment of the present invention.
Figure 3 is an exploded structural diagram of the housing in the first type of display instrument provided in an embodiment of the present invention.
Figure 4 is a structural diagram of an upper cover in the first type of display instrument provided in an embodiment of the present invention.
Figure 5 is a structural diagram of a digital tube plastic shell in the first type of display instrument provided in an embodiment of the present invention.
Figure 6 is an exploded structural diagram of a second type of display instrument provided in an embodiment of the present invention.
Figure 7 is a three-dimensional structural diagram of the second type of display instrument provided in an embodiment of the present invention from a bottom view.
Figure 8 is a partial cross-sectional structural diagram of the second type of display instrument provided in an embodiment of the present invention.
Figure 9 is a three-dimensional structural diagram of the second type of display instrument provided in an embodiment of the present invention from a top view.

The markups in the drawings are indicated as follows:
10-housing;
11-base;
111-internal cavity;
112-connection hole;
113-annular retaining strip;
114-pre-drilled hole;
115- screw hole;
12-upper cover;
13-limiting post;
14-slot;
151-first clearance groove;
152-second clearance groove;
16-groove;
20-light-transmitting layer;
21-limiting ring;
30-main control board;
40-digital tube circuit board;
41-LED bead;
50-digital tube plastic shell;
51-clamping block;
60-digital tube film paper;
70-cover plate;
81-backlight;
82-liquid crystal screen;
90-converter circuit board;
91-converter circuit board;
100-waterproof connector;
101-male pin;
110-silicone pad;
120-through hole; and
130-locking mechanism.

### Specific Embodiments

To make the objectives, features, and advantages of this invention more apparent and understandable, the technical solutions of the embodiments of this invention will be clearly and completely described below with reference to the accompanying drawings. Obviously, the embodiments described below are only some embodiments of this invention, not all embodiments. Based on the embodiments of this invention, all other embodiments obtained by those skilled in the art without creative effort are within the scope of protection of this invention.

In the description of this invention, it should be understood that the terms "upper," "lower," "top," "bottom," "inner," and "outer," etc., indicate the orientation or positional relationship based on the orientation or positional relationship shown in the accompanying drawings, and are only for the convenience of describing this invention and simplifying the description, and do not indicate or imply that the device or element referred to must have a specific orientation, or be constructed and operated in a specific orientation, and therefore should not be construed as a limitation of this invention. It should be noted that when a assembly is considered to be "connected" to another assembly, it can be directly connected to another assembly or may simultaneously have a assembly centrally located.

The technical solutions of the present invention will be further described below with reference to the accompanying drawings and specific embodiments.

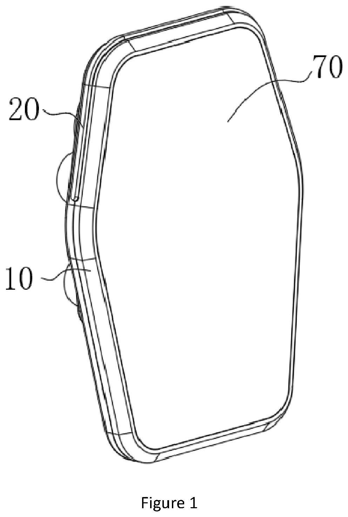

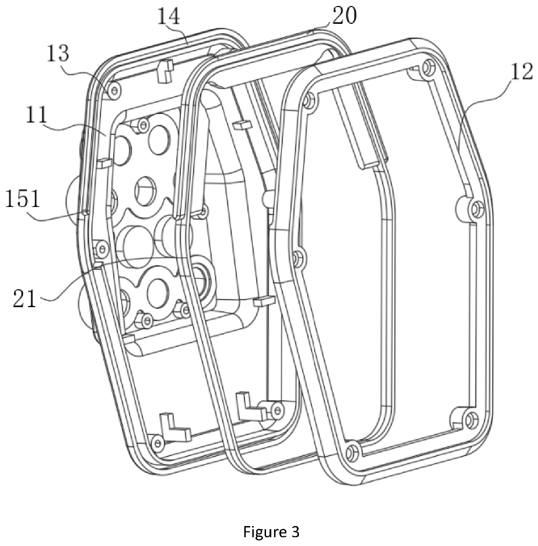

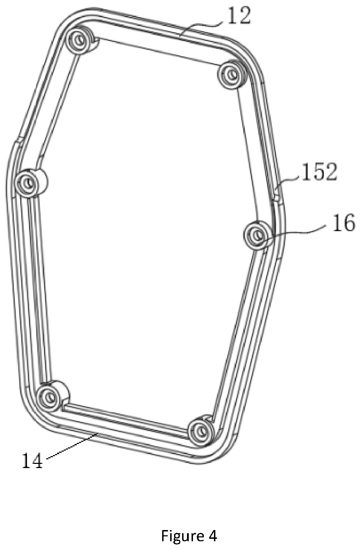

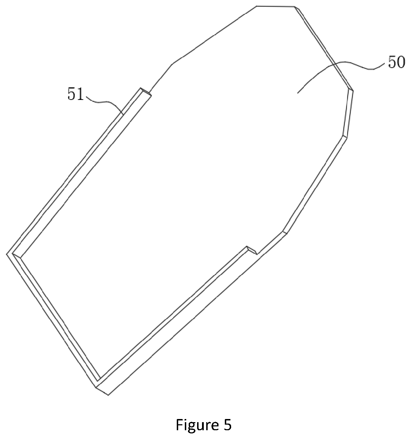

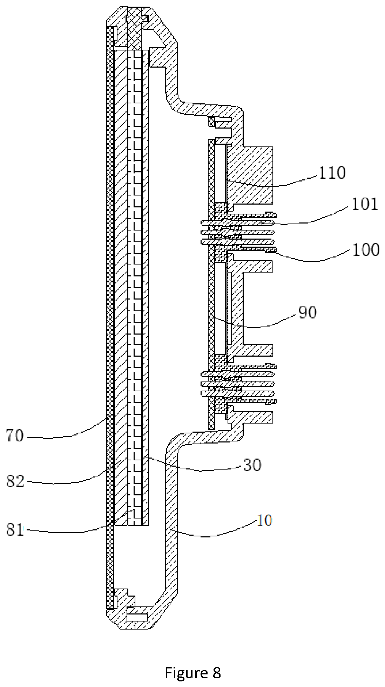

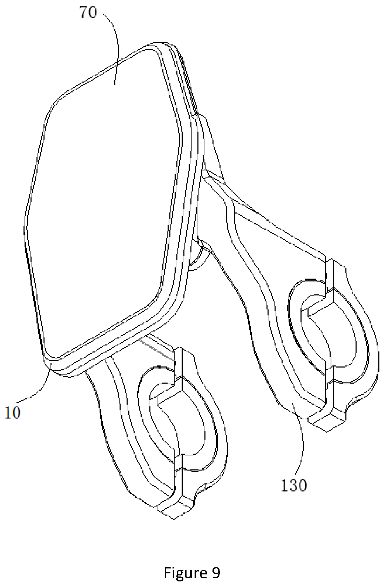

An embodiment of the present invention provides a display instrument as shown in figures 1-9, comprising a housing 10, a main control board 30, and a display assembly, wherein the display assembly is disposed on one side of the main control board 30 and electrically connected to the main control board 30; and
the display assembly adopts a digital display or a liquid crystal display; a light-transmitting layer 20 is installed on the housing 10, the light-transmitting layer 20 is arranged to cooperate with the display assembly to allow some light to pass through side walls of the housing 10.

It should be noted that the display instrument provided by the present invention, by setting the display assembly on one side of the main control board 30 and electrically connecting it to the main control board 30, and the display assembly adopting a digital display or liquid crystal display method; at the same time, a light-transmitting layer 20 is installed on the housing 10, which cooperates with the display assembly to allow some of the light emitted by the display assembly to pass through the side wall of the housing 10. While ensuring the normal realization of the front data display function of the display instrument, the light generated by the display assembly is further utilized, enabling the display instrument to have a side light emission function in addition to the front display, thereby improving the problem of the single display form in the prior art. The side light indication effect formed by the side wall light transmission can serve to alert pedestrians or vehicles in practical application scenarios, which is beneficial to improving the safety of use. This structure does not require the addition of an independent side light emission module, and can combine the display function and the side indication function in the structure, which is beneficial to simplifying the overall structure and taking into account the aesthetic appearance and functional expandability of the product. Therefore, this invention solves the problems of the single display form and lack of side light indication function in the prior art display instruments.

As shown in figures 1-5, the housing 10 comprises a base 11and a upper cover 12 which are connected mutually, slots 14 are provided on sides of both the base 11 and the upper cover 12, limiting rings 21 are provided on both sides of the light-transmitting layer 20, and outer walls of the limiting rings 21 are in contact with inner walls of the slots 14.

In specific implementations, the light-transmitting layer 20 can be secured to the slots 14 of the base 11 and the upper cover 12 by means of the limiting rings 21 on both sides, thereby achieving stable installation of the light-transmitting layer 20 on the housing 10. On the one hand, this can improve the reliability of the connection between the light-transmitting layer 20 and the housing 10, preventing the light-transmitting layer 20 from loosening, shifting, or falling off under vibration, bumpy or other operating environments, thus ensuring the stability of the lateral light transmission effect of the light-transmitting layer 20. On the other hand, the close fit between the limiting rings 21 and the slots 14 can also position the light-transmitting layer 20, making it easier to control the assembly position of the light-transmitting layer 20 on the housing 10, improving assembly accuracy and efficiency. In addition, this fitting method has a simple structure, is easy to process and assemble, and is conducive to improving the overall assembly stability and practicality of the product.

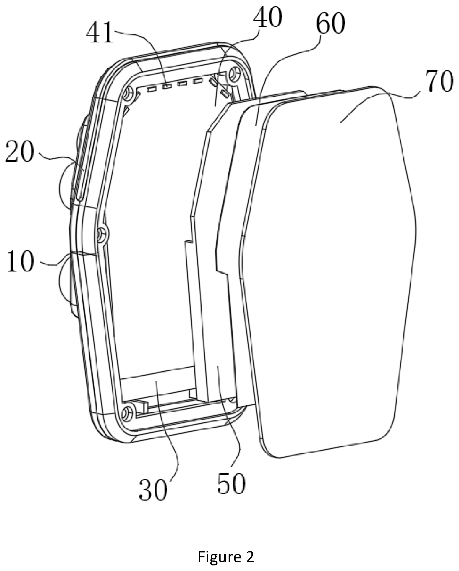

As shown in figures 2-4, the base 11 comprises sets of limiting posts 13 fixed inside, one side of the upper cover 12 is provided with grooves 16, and inner walls of the grooves 16 fit against outer walls of the limiting posts 13, and the base 11 and the upper cover 12 are connected by bolts.

During assembly, the upper cover 12 can engage with the limiting posts 13 on the base 11 through the grooves 16 to achieve quick positioning and guided assembly between the upper cover 12 and the base 11, thereby effectively preventing misalignment during assembly and improving the accuracy and stability of assembly of the housing 10. At the same time, the close engagement between the limiting posts 13 and the grooves 16 enhance the limiting effect after the base 11 and the upper cover 12 are connected, which helps to improve the overall structural stability of the housing 10.

As shown in figures 2-4, an outer wall of the base 11 is provided with first clearance grooves 151, and the upper cover 12 is provided with second clearance grooves 152; the light-transmitting layer 20 is inserted into the first clearance grooves 151 and the second clearance grooves 152 respectively.

In specific implementations, by setting the first clearance grooves 151 and the second clearance grooves 152 on the base 11 and the upper cover 12 respectively, and by inserting the light-transmitting layer 20 into the first clearance grooves 151 and the second clearance grooves 152, the stable installation and accurate positioning of the light-transmitting layer 20 can be achieved. This not only improves the reliability of the connection between the light-transmitting layer 20 and the housing 10, but also helps to ensure the stability of the lateral light emission effect of the light-transmitting layer 20, thereby improving the overall assembly performance and reliability of the display instrument.

As shown in figure 1, the housing 10 is equipped with a cover plate 70 for enabling light protection of the display assembly, and the cover plate 70 is made of PC materials or glass materials.

In practical implementation, by setting up the cover plate 70, the display assembly can be shielded and protected while ensuring normal light transmission, thereby reducing the adverse effects of external dust, moisture, and external impacts on the display assembly and improving their stability and lifespan. Furthermore, the cover plate 70 can be made of PC or glass materials, both of which have good light transmission performance, ensuring clear display of the content. PC materials have good impact resistance and are not easily broken, contributing to the safety and durability of the display instrument; glass materials have good surface flatness and light transmission, improving the display effect and product appearance, thus giving the display instrument both excellent protective and display performance.

As shown in figures 1-2, when the display assembly adopts a digital display, the display assembly comprises a digital tube circuit board 40 located on one side of the main control board 30, and LED beads 41 are provided on one side of the digital tube circuit board; and
a digital tube plastic shell 50 is provided on one side of the digital tube circuit board 40, and a digital tube film paper 60 is provided on one side of the digital tube plastic shell 50. In the present embodiment, a clamping block 51 is provided on one side of the digital tube plastic shell 50. The clamping block 51 limits the positioning of the digital tube circuit board 40, ensuring that the digital tube plastic shell 50 adheres to one side of the digital tube circuit board 40.

In specific implementations, by configuring the digital tube circuit board 40, multiple sets of LED beads 41, the digital tube plastic shell 50, and the digital tube film paper 60, a relatively stable digital display structure can be formed in the display assembly, improving the uniformity of the display brightness and the clarity of the displayed content. Simultaneously, by providing the clamping block 51 on the digital tube plastic shell 50, the digital tube circuit board 40 can be limited, improving the stability and assembly precision of the fit between the digital tube plastic shell 50 and the digital tube circuit board 40, thereby enhancing the overall assembly reliability and display stability of the display assembly.

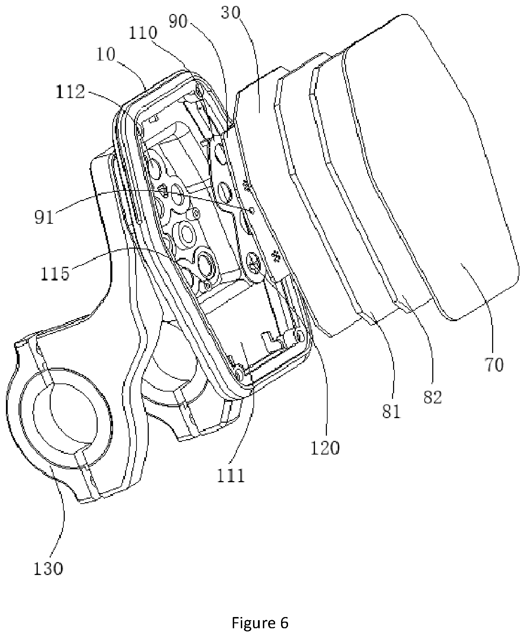

As shown in figure 1 and figure 6, when the display assembly adopts a liquid crystal display, the display assembly comprises a backlight 81, a liquid crystal screen 82, and the cover plate 70, and the light-transmitting layer 20 is made of light-transmitting silicone materials. The display assembly can also be composed of a digital tube screen or a TFT screen, with the specific screen chosen based on actual needs.

In specific implementations, when the display assembly uses an LCD display, by setting up a backlight 81, a liquid crystal screen 82, and a cover plate 70, the light transmission effect and protective performance of the display assembly can be improved while ensuring the richness and intuitiveness of the displayed content. Simultaneously, the light-transmitting layer 20 is made of light-transmitting silicone material, which not only facilitates stable light transmission through the sidewalls of the housing 10 but also improves the adaptability during assembly and the stability during use. Furthermore, the display assembly can also be equipped with a digital tube screen or a TFT screen, offering good adaptability and expandability to meet the needs of different application scenarios.

As shown in figures 6-9, the housing 10 comprises an internal cavity 111 containing a converter circuit board 90 electrically connected to the main control board 30, bottom portions of the housing 10 comprise connection holes 112, the converter circuit board 90 comprises waterproof connectors 100 on a side facing the connection holes 112, the waterproof connectors 100 are pluggable to external power supplies or signal lines; and
the converter circuit board 90 further comprises a silicone pad 110 on the side facing the connection holes 112 for waterproof sealing of the display instrument; the silicone pad 110 is fitted onto the waterproof connectors 100, and the converter circuit board 90 covers the connection holes 112, so that the waterproof connectors 100 at least partially extends into corresponding connection holes. In the present embodiment, several waterproof connectors 101 comprising female shells and male pins. For example, by setting several waterproof connectors 100 as female-shell male-pin waterproof connectors 101, and by setting male pins 101 on several waterproof connectors 100, a detachable connection with the male shell of the power supply can be easily achieved. In specific implementations, the converter circuit board 90 and the main control board 30 can be electrically connected through pin headers and female header connectors.

In specific implementations, by setting an converter circuit board 90 electrically connected to the main control board 30 inside the housing 10, and setting waterproof connectors 100 and silicone pad 110 corresponding to the connection holes 112 on the converter circuit board 90, not only can convenient plugging of the display instrument to external power or signal lines be achieved, but the sealing performance of the connection parts can also be improved, reducing the entry of external moisture and dust into the housing 10, thereby improving the overall waterproof performance and reliability of the display instrument. Meanwhile, since the waterproof connectors 100 adopts waterproof connectors 100 of female shells and male pins 101, and the converter circuit board 90 and the main control board 30 are electrically connected through pin headers and female header connectors, it is also beneficial to improve the stability of the connection between the components, the ease of assembly, and the convenience of later maintenance.

As shown in figure 6, the silicone pad 110 is provided with through holes 120 and the silicone pad 110 is fitted onto the waterproof connectors 100 through the through holes 120.

In specific implementations, by setting several through holes 120 on the silicone pad 110 and fitting the silicone pad 110 onto the waterproof connectors 100 through the through holes 120, accurate fit and stable installation between the silicone pad 110 and the waterproof connectors 100 can be achieved. This not only improves assembly convenience and accuracy but also enhances the sealing performance of the connection parts, thereby improving the overall waterproof reliability of the display instrument.

As shown in figures 6-9, the connection holes 112 are provided with annular retaining strips 113. The converter circuit board 90 is fixed inside the housing 10 by screws. For example, the housing 10 has screw holes 115 surrounding the receiving cavity 111, and the converter circuit board 90 has through holes 91, allowing screws to pass through the through holes 91 and into the screw holes 115, thereby fixing the converter circuit board 90 to the bottom position inside the housing 10.

In specific implementations, by providing the annular retaining strips 113 inside the connection holes 112, a limiting and locking fit can be formed on the corresponding components located in the connection holes 112, improving the stability of the fit between the waterproof connectors 100 and the connection holes 112, preventing the waterproof connectors 100 from loosening or shifting during assembly or use, thus ensuring the stability of the connection structure. At the same time, the annular retaining strips 113 can also reduce the gap between the connection holes 112 and the waterproof connectors 100 to a certain extent, which helps to improve the sealing effect of the connection, thereby further improving the overall waterproof performance and reliability of the display instrument.

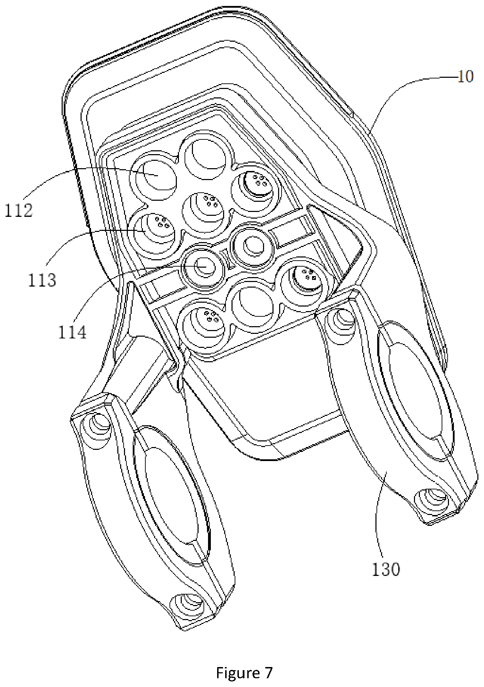

As shown in figure 7, the housing is provided with pre-drilled holes. The housing 10 comprises several pre-drilled holes 114, allowing for the setting and addition of different numbers of waterproof connectors 100 according to the desired functions. A locking mechanism 130 is installed on the housing 10 for securing the display instrument. The locking mechanism 130 facilitates the fixed installation of the waterproof display instrument on electric bicycles, electric scooters, and other mobility devices.

Preferably, the housing is equipped with a locking mechanism for locking the display instrument in place.

Working Principle: The present invention provides a display instrument by placing a display assembly on one side of a main control board 30 and electrically connecting it to the main control board 30. The display assembly adopts a digital display or liquid crystal display. Simultaneously, a light-transmitting layer 20 is installed on the housing 10. The light-transmitting layer 20 cooperates with the display assembly, allowing some of the light emitted by the display assembly to pass through the side wall of the housing 10. While ensuring the normal display function of the front data display, the light generated by the display assembly is further utilized, enabling the display instrument to have a side-emitting light function in addition to the front display, thereby improving the problem of the single display form in the prior art. The side-emitting light through the side wall forms a side-light indication effect, which can serve to alert pedestrians or vehicles in practical application scenarios, improving safety. This structure does not require an additional independent side-emitting light module, and can structurally combine display function and side-emitting indication function, simplifying the overall structure while taking into account the product's aesthetics and functional expandability. Therefore, the present invention solves the problems of the single display form and lack of side-emitting light indication function in the prior art display instruments.

The above-described embodiments are only used to illustrate the technical solutions of the present invention, and are not intended to limit it. Although the present invention has been described in detail with reference to the foregoing embodiments, those skilled in the art should understand that modifications can still be made to the technical solutions described in the foregoing embodiments, or equivalent substitutions can be made to some of the technical features. Such modifications or substitutions do not cause the essence of the corresponding technical solutions to deviate from the spirit and scope of the technical solutions of the embodiments of the present invention.

## Claims

1. A display instrument, comprising a housing (10), a main control board (30), and a display assembly, wherein the display assembly is disposed on one side of the main control board (30) and electrically connected to the main control board (30); and
the display assembly adopts a digital display or a liquid crystal display; a light-transmitting layer (20) is installed on the housing (10), the light-transmitting layer (20) is arranged to cooperate with the display assembly to allow some light to pass through side walls of the housing (10).

2. The display instrument according to claim 1, wherein the housing (10) comprises a base (11) and an upper cover (12) which are connected mutually, slots (14) are provided on sides of both the base (11) and the upper cover (12), limiting rings (21) are provided on both sides of the light-transmitting layer (20), and outer walls of the limiting rings (21) are in contact with inner walls of the slots (14).

3. The display instrument according to claim 2, wherein the base (11) comprises sets of limiting posts (13) fixed inside, one side of the upper cover (12) is provided with grooves (16), and inner walls of the grooves (16) fit against outer walls of the limiting posts (13), and the base (11) and the upper cover (12) are connected by bolts.

4. The display instrument according to claim 3, wherein an outer wall of the base (11) is provided with first clearance grooves (151), and the upper cover (12) is provided with second clearance grooves (152); the light-transmitting layer (20) is inserted into the first clearance grooves (151) and the second clearance grooves (152) respectively.

5. The display instrument according to claim 1, wherein the housing (10) is equipped with a cover plate (70) for enabling light protection of the display assembly, and the cover plate (70) is made of PC materials or glass materials.

6. The display instrument according to claim 5, wherein when the display assembly adopts a digital display, the display assembly comprises a digital tube circuit board (40) located on one side of the main control board (30), and LED beads (41) are provided on one side of the digital tube circuit board (40); a digital tube plastic shell (50) is provided on one side of the digital tube circuit board (40), and a digital tube film paper (60) is provided on one side of the digital tube plastic shell (50).

7. The display instrument according to claim 5, wherein when the display assembly adopts a liquid crystal display, the display assembly comprises a backlight (81), a liquid crystal screen (82), and the cover plate (70), and the light-transmitting layer (20) is made of light-transmitting silicone materials.

8. The display instrument according to claim 1, wherein the housing (10) comprises an internal cavity (111) containing a converter circuit board (90) electrically connected to the main control board (30), bottom portions of the housing (10) comprise connection holes (112), the converter circuit board (90) comprises waterproof connectors (100) on a side facing the connection holes (112), the waterproof connectors (100) are pluggable to external power supplies or signal lines; and
the converter circuit board (90) further comprises a silicone pad (110) on the side facing the connection holes (112) for waterproof sealing of the display instrument; the silicone pad (110) is fitted onto the waterproof connectors (100), and the converter circuit board (90) covers the connection holes (112), so that the waterproof connectors (100) at least partially extends into corresponding connection holes (112).

9. The display instrument according to claim 8, wherein the silicone pad (110) is provided with through holes (120) and the silicone pad (110) is fitted onto the waterproof connectors (100) through the through holes (120).

10. The display instrument according to claim 8, wherein the connection holes (112) are provided with annular retaining strips (113).

11. The display instrument according to claim 1, wherein the housing (10) is provided with pre-drilled holes (114).

12. The display instrument according to claim 1, wherein the housing (10) is equipped with a locking mechanism (130) for locking the display instrument in place.
